# EUROPEAN PATENT APPLICATION

(11) **EP 1 162 132 A2**
(43) Date of publication of application: **12.12.2001**
(21) Application number: 01113769.2
(22) Date of filing: 05.06.2001
(51) Int. Cl.: B62J 35/00, B62J 37/00

(54) **Fuel pipeline connecting structure**

(30) Priority: 05.06.2000 JP 2000168050
(71) Applicant: HONDA GIKEN KOGYO KABUSHIKI KAISHA, Minato-ku Tokyo (JP)
(72) Inventor: Nakagawa, Mitsuo, 4-1, Chuo 1-chome, Wako-shi, Saitama (JP); Suzuki, Osamu, 4-1, Chuo 1-chome, Wako-shi, Saitama (JP); Takagi, Keiichiro, 4-1, Chuo 1-chome, Wako-shi, Saitama (JP); Hikichi, Toichiro, 4-1, Chuo 1-chome, Wako-shi, Saitama (JP)
(74) Representative: Liska, Horst, Dr.-Ing.

(57) **Abstract**

A flange portion (87) is provided on a fuel pipeline (80) for discharging fuel. A pipeline insertion hole (63) in which one end portion of the fuel pipeline (80) is to be inserted is formed at the outlet of a discharge through-hole (62). A wall portion (64) extends from the outer surface of a fuel tank (21) in such a manner as to surround the pipeline insertion hole (63). Claws (95) are mounted on the wall portion (64), and then the claws (95) are engaged with the flange portion (87) of the fuel pipeline (80). With this configuration, the fuel pipeline (80) is prevented from being pulled out of the pipeline insertion hole (63).

The fuel pipeline can be easily, speedily connected to a fuel tank by inserting the fuel pipeline in the pipeline insertion hole, and engaging the claws with the flange portion of the fuel pipeline. Further, the projecting amount of the wall portion can be made smaller than the projecting amount of a conventional fuel pipeline connecting portion which projects from the tank outer surface to be connected to the fuel pipeline. As a result, it is possible to carry the fuel tank without interference of the wall portion with other members, and hence to improve the handling performance of the fuel tank.

## Description

The present invention relates to a fuel pipeline connecting structure capable of reducing the projecting amount of each of fuel pipeline connecting portions on a fuel tank side and an injector cap side, and capable of connecting a fuel pipeline to a fuel tank and an injector cap for a short time.

A connecting structure for connecting a fuel pipeline to a fuel tank is known, for example, from Japanese Patent Laid-open No. Hei 8-310260 entitled "Connecting Structure for Connecting Fuel Tube to Fuel Tank".

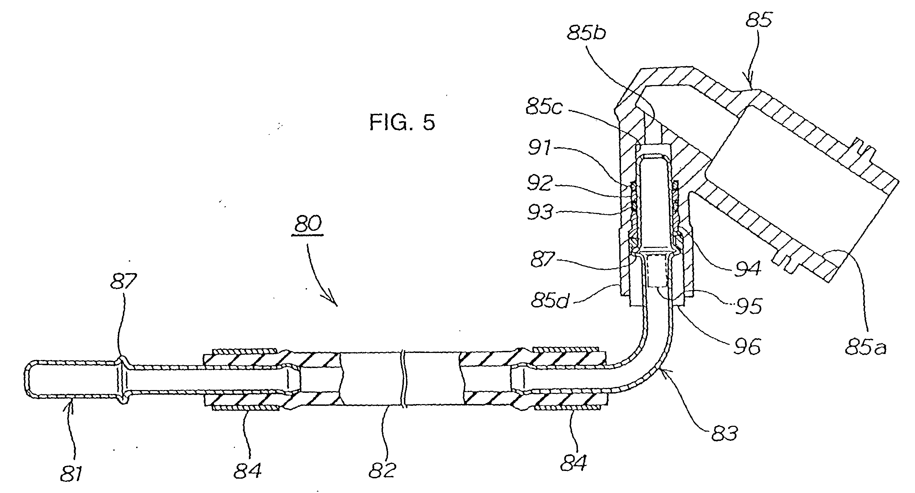

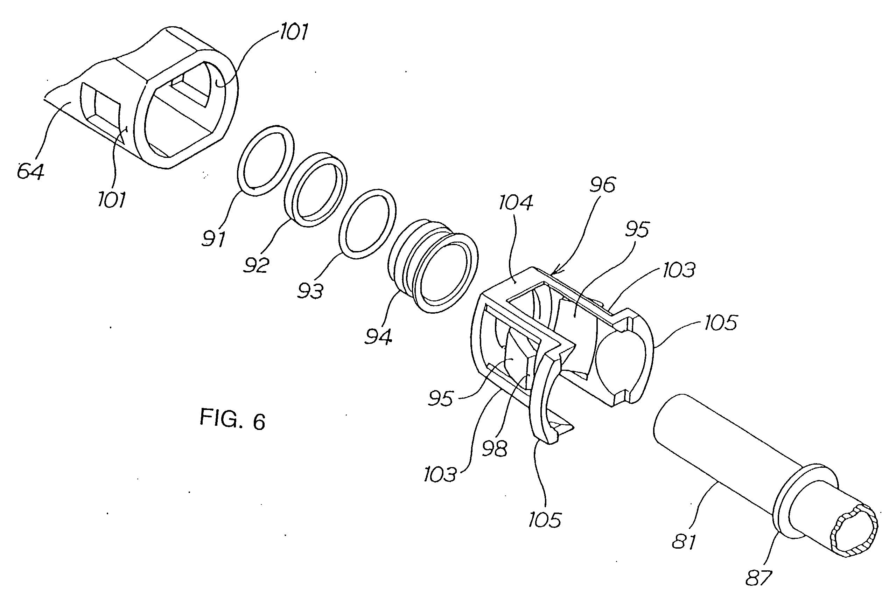

FIG. 6 of the above document describes a connecting structure for connecting a fuel tube C to a fuel tank T, in which an L-shaped connecting cylinder Jp projects from the upper surface of the fuel tank T, and a connecting member J' provided at the leading end of the fuel tube C is connected to the connecting cylinder Jp. Further, FIG. 5 of the above document describes a connecting structure for connecting a fuel tube C₂ to the fuel tank T, in which a connecting cylinder 12a projects from the upper surface of the fuel tank T, that is, projects from a pump bracket B; a connecting member J₂ provided at the leading end of the fuel tube C₂ is connected to the connecting cylinder 12a; a fixing plate Pf is mounted on an end portion of the connecting member J₂; and the fixed plate Pf is fastened to the pump bracket B by means of a fixing bolt 18 mounted on the pump bracket B and a nut 19.

In the technique described in FIG. 6 of the above document, since the connecting member J' is connected to the connecting cylinder Jp, a specific space must be ensured between the upper surface of the fuel tank T and the connecting member J', with a result that the connecting cylinder Jp largely projects from the upper surface of the fuel tank T.

Such a technique has a problem that since the connecting cylinder Jp largely projects from the fuel tank T, in the case of carrying the fuel tank T in a state before the connecting member J' is connected to the fuel tank T, the connecting cylinder Jp may often interfere with other members.

The technique shown in FIG. 5 of the above document has a problem that since a flange portion F of the connecting member J₂ is fastened to the fixing plate Pf by means of the fixing bolt 18 and the nut 19 for preventing the connecting member J₂ from being pulled out of the connecting cylinder 12a, it takes a lot of time to fasten the nut 19 to the fixing bolt 18, and accordingly, it takes a lot of time to connect the fuel tube C₂ to the fuel tank T.

An object of the present invention is to provide a fuel pipeline connecting structure capable of reducing the projecting amount of each of fuel pipeline connecting portions on a fuel tank side and an injector cap side, and easily, speedily connecting a fuel pipeline to a fuel tank and an injector cap.

To achieve the above object, according to a first aspect of the invention, there is provided a fuel pipeline connecting structure for connecting a fuel pipeline to a fuel tank having a discharge through-hole opened in its outer surface for discharging fuel from the fuel tank, characterized in that a flange is provided on the fuel pipeline for discharging fuel from the fuel tank; a pipeline insertion hole in which one end portion of the fuel pipeline is to be inserted is provided at the outlet of the discharge through-hole; a wall portion extends from the outer surface of the fuel tank in such a manner as to surround the pipeline insertion hole; and claws are provided or mounted on the wall portion; wherein the fuel pipeline is inserted in the pipeline insertion hole and the claws are engaged with the flange of the fuel pipeline, whereby the fuel pipeline is prevented from being pulled out of the pipeline insertion hole.

With this configuration, the fuel pipeline can be easily, speedily connected to the fuel tank by inserting the fuel pipeline in the pipeline insertion hole, and engaging the claws with the flange of the fuel pipeline.

Further, since the wall portion used only for allowing the claws to be provided or mounted thereon extends from the tank outer surface, the projecting amount of the wall portion can be made smaller than the projecting amount of the conventional fuel pipeline connecting portion which projects from the tank outer surface to be connected to the fuel pipeline. As a result, it is possible to carry the fuel tank without interference of the wall portion with other members, and hence to improve the handling performance of the fuel tank.

Preferably, the wall portion is configured as a pair of tongue pieces extending from a filler portion through which fuel is to be injected in the fuel tank, and the claws are integrally formed on the tongue pieces.

With this configuration, since the claws are integrally formed on the tongue pieces, it is possible to reduce the number of parts required for connecting the fuel pipeline to the fuel tank and hence to lower the production cost of the fuel supply line.

Preferably, the wall portion is formed into a cylindrical shape, and a flange having the claws, prepared separately from the wall portion, is fitted into the cylindrical wall portion.

With this configuration, for example, in the case of changing the length or diameter of the fuel pipeline to be inserted in the pipeline insertion hole, such a change in length or diameter of the fuel pipeline can be easily realized by changing the dimensions and shapes of the claws without changing the dimension and shape of the wall portion side.

According to a further aspect of the invention, there is provided a fuel pipeline connecting structure for connecting a fuel pipeline to an injector cap including an injection valve holding hole for holding a fuel injection valve and a fuel supplying hole for supplying fuel to the fuel injection valve, characterized in that a flange is provided on the fuel pipeline for discharging fuel to the fuel supplying hole of the injector cap; a pipeline insertion hole in which one end of the fuel pipeline is to be inserted is provided at the inlet of the fuel supplying hole; a wall portion extends from a peripheral wall of an opening portion of the pipeline insertion hole in such a manner as to surround the pipeline insertion hole; and claws are provided or mounted on the wall portion; wherein the fuel pipeline is inserted in the pipeline insertion hole and the claws are engaged with the flange of the fuel pipeline, whereby the fuel pipeline is prevented from being pulled out of the pipeline insertion hole.

With this configuration, the fuel pipeline can be easily, speedily connected to the injector cap by inserting the fuel pipeline in the pipeline insertion hole, and engaging the claws with the flange of the fuel pipeline.

Further, since the wall portion used only for allowing the claws to be provided or mounted thereon extends from the peripheral wall of the opening portion of the pipeline insertion hole, the projecting amount of the wall portion can be made smaller than the projecting amount of the conventional fuel pipeline connecting portion which projects from the injector cap to be connected to the fuel pipeline. As a result, it is possible to assembly or carry the injector cap without interference of the wall portion with other members, and hence to improve the handling performance of the injector cap.

Preferably, the wall portion is configured as a pair of tongue pieces, and the claws are integrally formed on the tongue pieces.

With this configuration, since the claws are integrally formed on the tongue pieces, it is possible to reduce the number of parts required for connecting the fuel pipeline to the injector cap and hence to lower the production cost of the fuel supply line.

Preferably, the wall portion is formed into a cylindrical shape, and a flange having the claws, prepared separately from the wall portion, is fitted into the cylindrical wall portion.

With this configuration, for example, in the case of changing the length or diameter of the fuel pipeline to be inserted in the pipeline insertion hole, such a change in length or diameter of the fuel pipeline can be easily realized by changing the dimensions and shapes of the claws without changing the dimension and shape of the wall portion side.

Preferably, the flange is provided on each of both end portions of the fuel pipeline.

With this configuration, since the shapes of both the end portions, provided with the flanges, of the fuel pipeline may be configured to be identical to each other, both the end portions of the fuel pipeline can be reversibly connected to parts of the fuel supply line, to thereby improve the assembling performance of the fuel pipeline.

Hereinafter, embodiments of the present invention will be described with reference to the accompanying drawings. In addition, the drawings should be viewed in the direction of characters.

FIG. 1 is a side view of a motorcycle to which a fuel pipeline connecting structure of the present invention is applied.

FIG. 2 is a side view showing a fuel tank to which the fuel pipeline connecting structure of the present invention is applied.

FIG. 3 is a plan view showing the fuel tank to which the fuel pipeline connecting structure of the present invention is applied.

FIG. 4 is a sectional view showing the fuel tank to which the fuel pipeline connecting structure of the present invention is applied.

FIG. 5 is a sectional view of a fuel pipeline to which the fuel pipeline connecting structure of the present invention is applied.

FIG. 6 is an exploded perspective view illustrating the fuel pipeline connecting structure of the present invention.

FIG. 7 is an enlarged view showing an A portion of FIG. 4.

FIG. 8 is a sectional view of a pipeline insertion hole of the fuel pipeline connecting structure of the present invention.

FIGS. 9(a) to 9(c) are views illustrating the function of the fuel pipeline connecting structure of the present invention.

FIG. 10 is a sectional view of a fuel pipeline connecting structure as a comparative example.

FIGS. 11(a) and 11(b) are views illustrating another embodiment of the fuel pipeline connecting structure of the present invention.

FIGS. 12(a) and 12(b) are views illustrating first and second modifications of the fuel pipeline connecting structure of the present invention.

FIGS. 13(a) and 13(b) are views illustrating third and fourth modifications of the fuel pipeline connecting structure of the present invention.

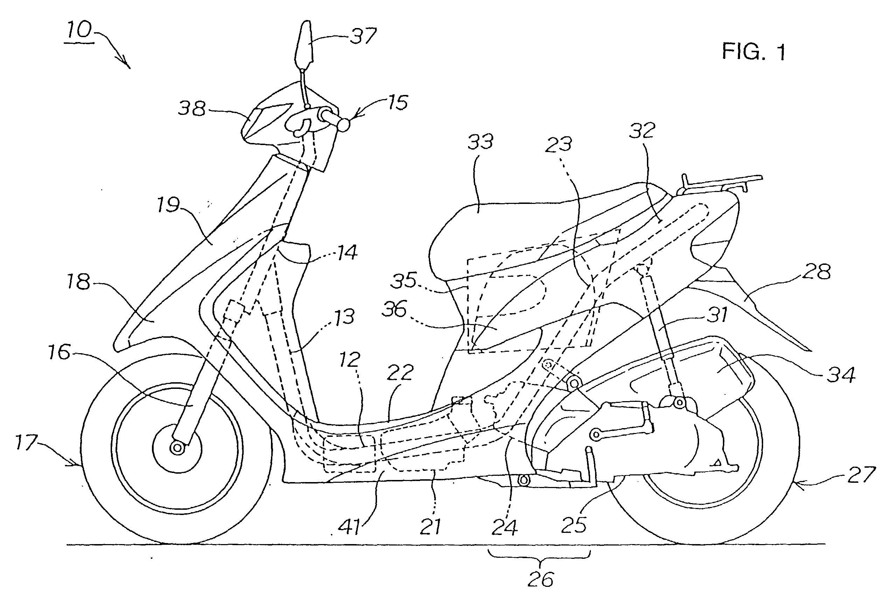

FIG. 1 is a side view of a motorcycle to which a fuel pipeline connecting structure of the present invention is applied. A motorcycle 10 includes a head pipe 14 mounted to a down tube 13 provided at a front portion of a body frame 12; a handlebar 15 rotatably supported by an upper portion of the head pipe 14 and a front fork 16 rotatably supported by a lower portion of the head pipe 14; a front wheel 17 rotatably supported by the lower ends of the front fork 16; a front fender 18 for covering an upper portion of the front wheel 17; a front cover 19 for covering an upper portion of the front fork 16 and the head pipe 14; a fuel tank 21 mounted to the body frame 12; and a floor step 22 mounted at a position over the fuel tank 21.

The motorcycle 10 also includes a power unit 26 which is composed of an engine 24 and a transmission 25 and which is disposed under a rear frame 23 constituting a rear portion of the body frame 12; a rear wheel 27 to which a drive force is transmitted from the transmission 25; a rear fender 28 for covering an upper portion of the rear wheel 27; a rear cushion unit 31 for absorbing vibration of the rear wheel 27 thereby preventing the vibration of the rear wheel 27 from being transmitted to the body frame 12 side; a frame body cover 32 for covering the rear frame 23; and a seat 33 disposed over the frame body cover 32. In the figure, reference numeral 34 designates an air cleaner; 35 is a luggage box; 36 is a helmet; 37 is a mirror; 38 is a headlamp; and 41 is an under cover.

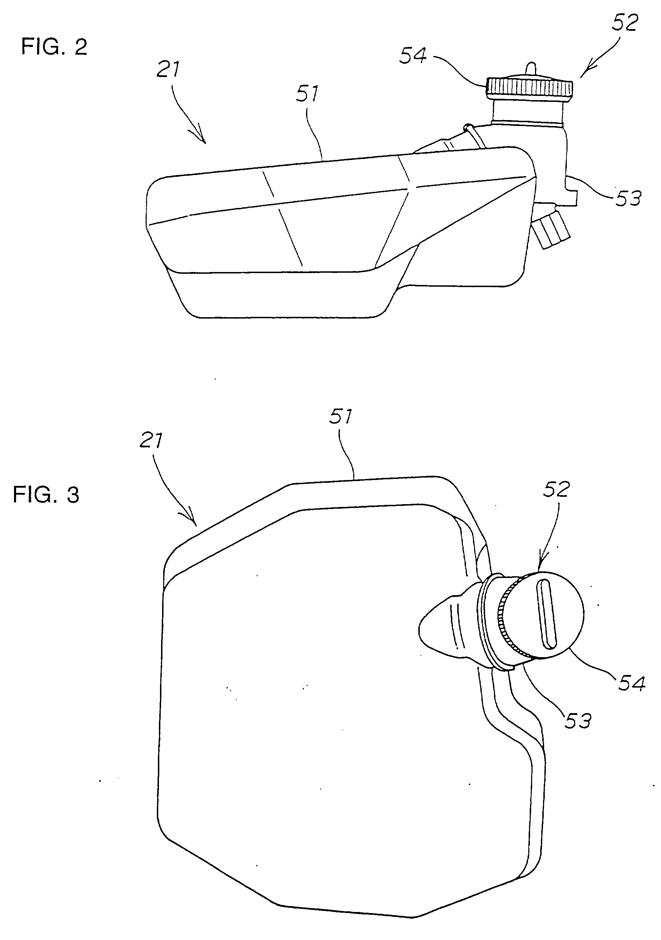

FIG. 2 is a side view showing the fuel tank to which the fuel pipeline connecting structure of the present invention is applied. The fuel tank 21 includes a resin made tank main body 51 and a filler port portion 52 mounted to the tank main body 51.

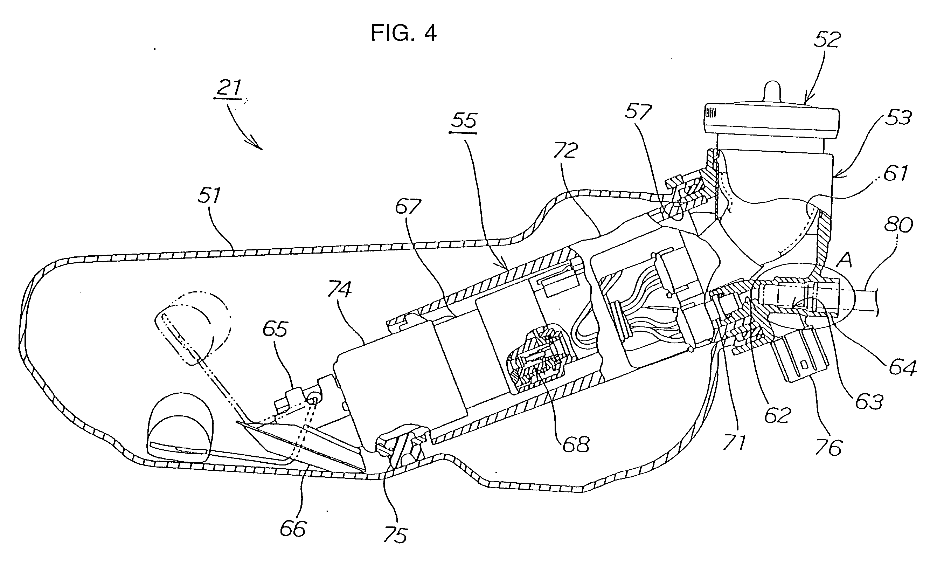

FIG. 3 is a.plan view showing the fuel tank to which the fuel pipeline connecting structure of the present invention is applied. The tank main body 51 of the fuel tank 21 is produced from a resin by blow molding. The tank main body 51 has a simple structure in which mounting portions for mounting tank equipment such as a filler, a residual fuel level meter unit, a fuel pipe, and a vent pipe, which have been formed in a conventional tank main body, are not formed.

The filler port portion 52 includes a filler 53 and a filler cap 54 for closing the opening of the filler 53.

FIG. 4 is a sectional view showing the fuel tank to which the fuel pipeline connecting structure of the present invention is applied. The filler port portion 52 includes a tank equipment assembly 55 which is substantially entirely inserted in and connected to the tank main body 51.

The tank main body 51 includes an opening portion 57 for allowing the tank equipment assembly 55 to be inserted in the tank main body 51 therethrough.

The filler 53 includes an injection thrbugh-hole 61 for injecting fuel in the tank main body 51 and a discharge through-hole 62 for discharging fuel from the tank main body 51 to the engine side. A pipeline insertion hole 63, to which a fuel pipeline 80 for supplying fuel to the engine side (which will be described later) is connected, is formed at the outlet of the discharge through-hole 62. The discharge through-hole 62 has a wall portion 64 extending from a peripheral wall of an opening portion of the pipeline insertion hole 63 in such a manner as to surround the opening portion of the pipeline insertion hole 63.

The tank equipment assembly 55 includes a residual fuel level meter unit 65 for detecting a residual amount of fuel; a suction port 66 through which fuel is sucked; a motor-driven type fuel pump 67 connected to the suction port 66; a check valve 68 provided on the discharge side of the fuel pump 67; a communication pipe 71 communicated to a strainer (not shown) disposed on the downstream side of the check valve 68 and connected to the discharge through-hole 62 of the filler 53; and a tank equipment holder 72 for supporting the suction port 66, fuel pump 67, check valve 68, strainer, and communication pipe 71.

In the figure, reference numeral 74 designates a pump holder for mounting the fuel pump 67 on the tank equipment holder 72; 75 is a cushion rubber mounted on the pump holder 74 for supporting an end portion of the tank equipment assembly 55; and 76 is a connector for supplying an external power to the residual fuel level meter unit 65 and the fuel pump 67 and for outputting a residual fuel amount signal of the residual fuel level meter unit 65.

FIG. 5 is a sectional view of a fuel pipeline to which the fuel pipeline connecting structure of the present invention is applied. The fuel pipeline 80 includes a first connection pipe 81 connected to the filler 53 (see FIG. 4), a fuel hose 82 having one end connected to the first connection pipe 81, and an L-shaped second connection pipe 83 connected to the other end of the fuel hose 82. In the figure, reference numeral 84 designates a hose band, and 85 is an injector cap which is connected at one end portion thereof to the second connection pipe 83 and connected at the other end portion thereof to a fuel injection valve (not shown) for injecting fuel in an intake port of the engine.

Each of the first and second connection pipes 81 and 83 is a metal pipe having a flange portion 87 at a position apart from the tip of the pipe by a specific distance.

The fuel hose 82 is made from rubber.

The first connection pipe 81 can be connected to the injector cap 85 and the second connection pipe 83 can be connected to the filler 53 by making the shape of the end portion including the flange portion 87 of the first connection pipe 81 identical to that of the second connection pipe 83.

In this case, the curving shape of each of the first and second connection pipes 81 and 83 may be suitably set.

FIG. 6 is an exploded perspective view illustrating the fuel pipeline connecting structure on the fuel tank side according to the present invention. The fuel pipeline 80 (see FIG. 5) is connected to the fuel tank 21 (see FIG. 4) by inserting an O-ring 91, a spacer 92, and an O-ring 93 in this order in the pipeline insertion hole 63 (see FIG. 4) of the filler 53 (see FIG. 4), fitting a bush 94 in the pipeline insertion hole 63, inserting a retainer 96 having two claws 95 in the wall portion 64, and inserting the first connection pipe 81 of the fuel pipeline 80 from the rear side of the retainer 96 into the pipeline insertion hole 63.

The wall portion 64 includes two claw engaging portions 101 for engaging back surfaces 98 (only one on this side is shown in FIG. 6) of the claws 95 of the retainer 96.

The retainer 96 is an elastic member including the two claws 95, two claw supporting portions 103 for supporting the claws 95, a connecting portion 104 for connecting the claw supporting portions 103 to each other, and two flanges 105 extending radially outwardly from the claw supporting portions 103.

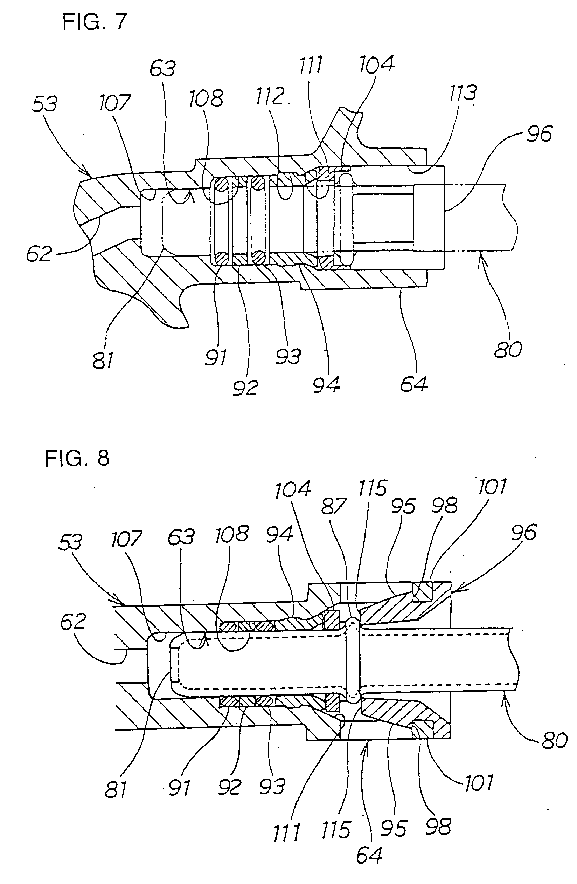

FIG. 7 is an enlarged view of an A portion of FIG. 4. As shown in this figure, the piping insertion hole 63 has a small-diameter hole 107, a large-diameter hole 108, and a taper hole 111 which are disposed from the depth side in this order. The tip portion of the first connection pipe 81 of the fuel pipeline 80, which passes through the taper hole 111 and the large-diameter hole 108, is inserted in the small-diameter hole 107. The O-ring 91, spacer 92, and O-ring 93 are inserted in the deep portion of the large-diameter hole 108. An annular groove 112 is formed in an inner surface portion, on the outlet side, of the large-diameter hole 108. The bush 94 is inserted in both the large-diameter hole 108 and the taper hole 111 in such a manner as to be fitted in the annular groove 112. The retainer 96 is inserted in a hollow portion 113 of the wall portion 64.

FIG. 8 is a sectional view of the pipeline insertion hole of the fuel pipeline connecting structure of the present invention. In this figure, the horizontal cross-sections of the pipeline insertion hole 63 and the wall portion 64 are shown. Front surfaces 115 of the claws 95 of the retainer 96 are engaged with the flange portion 87 of the first connection pipe 81 of the fuel pipeline 80 and the back surfaces 98 of the claws 95 are engaged with the claw engaging portions 101 of the wall portion 64, whereby the first connection pipe 81 is prevented from being pulled out of the pipeline insertion hole 63.

The function of the above-described fuel pipeline connecting structure will be described below.

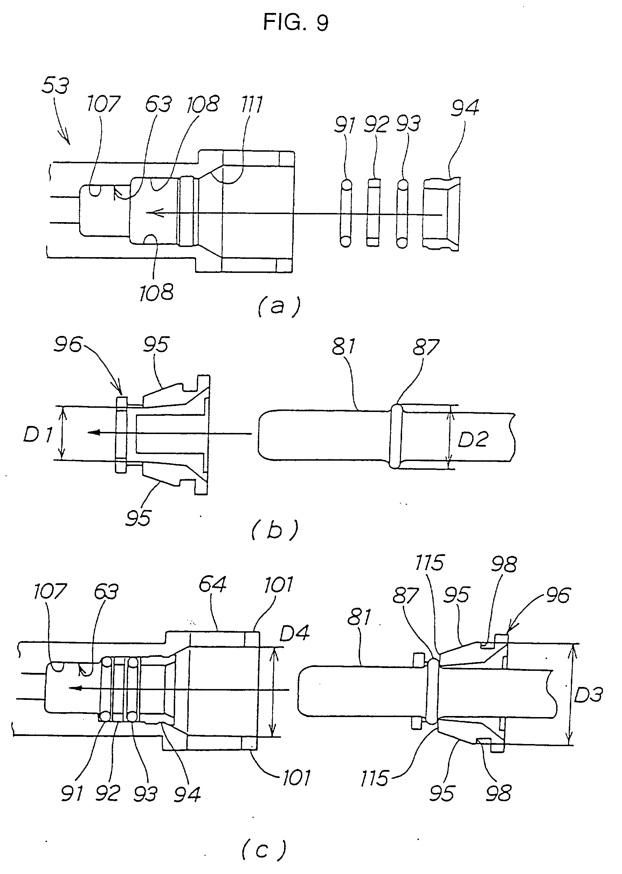

FIGS. 9(a), 9(b), 9(c) and 9(d) are views illustrating the function of the fuel pipeline connecting structure of the present invention.

As shown in FIG. 9(a), the O-ring 91, spacer 92, and O-ring 93 are inserted in this order in a deep portion of the large-diameter hole 108 of the pipeline insertion hole 63 of the filler 53, and the bush 94 is fitted in both the outlet portion of the large-diameter hole 108 and the taper hole 111.

As shown in FIG. 9(b), the tip portion of the first connection pipe 81 is inserted in the retainer 96. At this time, since a distance D1 between the claws 95 is smaller than an outside diameter D2 of the flange portion 87 of the first connection pipe 81, the claws 95 are once extended radially outwardly by the flange portion 87 and then returned to the original positions by the elastic forces after the flange portion 87 passes through the claws 95. Consequently, as shown in FIG. 9(c), the front surfaces 115 of the claws 95 of the retainer 96 are engaged with the flange portion 87 of the first connection pipe 81.

The first connection pipe 81, to which the retainer 96 has been mounted as described above, is then inserted in the pipeline insertion hole 63. At this time, since a distance D3 between the outermost portions of the claws 95 is larger than a distance D4 between the claw engaging portions 101 of the wall portion 64, the claws 95 are once contracted radially inwardly by the claw engaging portions 101 and then returned to the original positions by the elastic forces after the claws 95 pass through the claw engaging portions 101. Consequently, as shown in FIG. 8, the back surfaces 98 of the claws 95 of the retainer 96 are engaged with the claw engaging portions 101 of the wall portion 64.

The connection of the fuel pipeline 80 to the fuel tank is thus ended.

The fuel pipeline connecting structure on the injector cap side will be described below with reference to FIG. 5.

The injector cap 85 includes an injection valve holding hole 85a for holding a fuel injection valve; a fuel supplying hole 85b for supplying fuel to the fuel injection valve; a pipeline insertion hole 85c through which the second connection pipe 83 of the fuel pipeline 80 is to be inserted in the inlet of the fuel supplying hole 85b; and a wall portion 85d extending from a peripheral wall of an opening portion of the pipeline insertion hole 85c in such a manner as to surround the opening portion of the pipeline insertion hole 85c.

The connecting structure for connecting the second connection pipe 83 of the fuel pipeline 80 into the pipeline insertion hole 85c of the injector cap 85 is basically the same as the above-described connecting structure for connecting the first connection pipe 81 of the fuel pipeline 80 into the pipeline insertion hole 63 of the filler 53 (see FIGS. 6 to 8).

That is to say, the pipeline connecting structure on the injector cap 85 side is configured such that the fuel pipeline 80 is connected into the injector cap 85 by inserting an O-ring 91, a spacer 92, and an O-ring 93 in this order in the pipeline insertion hole 85c of the injector cap 85, fitting a bush 94 in the pipeline insertion hole 85c, inserting a retainer 96 having two claws 95 (see FIG. 6) in the wall portion 85d, and inserting the second connection pipe 83 of the fuel pipeline 80 from the rear side of the retainer 96 in the pipeline insertion hole 85c.

The method of connecting the fuel pipeline 80 into the injector cap 85 is also the same as that described with reference to FIGS. 9(a) to 9(c), and therefore, the overlapped description thereof is omitted.

As described above, the present invention is characterized in that the flange portions 87 are provided at both end portions of the fuel pipeline 80, that is, at the first and second connection pipes 81 and 83.

The shapes of both the end portions, provided with the flange portions 87, of the fuel pipeline 80 may be configured to be identical to each other. In this case, both the end portions of the fuel pipeline 80 can be reversibly connected to parts of the fuel supply line, to thereby improve the assembling performance of the fuel pipeline 80.

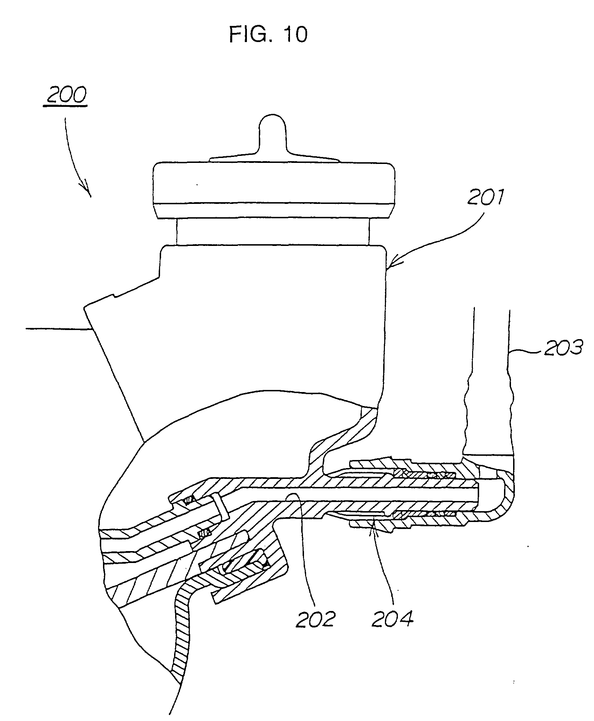

FIG. 10 is a sectional view showing a comparative example to be compared with the fuel pipeline connecting structure of the present invention. A filler 201 of a fuel tank 200 has a fuel discharge through-hole 202 for discharging fuel from the fuel tank 200, and to connect a fuel pipeline 203 to the fuel discharge through-hole 202, a pipeline connecting portion 204 is provided on the filler 201 in such a manner as to project therefrom.

That is to say, in the fuel pipeline connecting structure as the comparative example, the filler 201 side has a male type fitting structure while the fuel pipeline 203 side has a female type fitting structure.

In the comparative example, since the filler 201 side has the male type fitting structure, the portion projecting from the surface of the filler 201 becomes longer, with a result that there may occur an inconvenience. For example, in the case of carrying the filler 201 in a state before the fuel pipeline 203 is connected to the filler 201, the pipeline connecting portion 204 as the portion projecting from the filler 201 may obstruct the work for carrying the filler 201, or it may be caught by other members to be broken.

On the contrary, according to the fuel pipeline connecting structure of the present invention, as described above with reference to FIG. 8, since the female type pipeline insertion hole 63 is provided on the filler side and the male type first connection pipe 81 is provided on the fuel pipeline 80 side, it is possible to make the projecting amount on the filler side smaller than that in the comparative example, and hence to eliminate the above-described inconvenience that the projecting portion on the filler side obstructs the work for carrying the filler.

As described above with reference to FIGS. 4 to 8, according to the present invention, there is provided the fuel tank 21 in which the discharge through-hole 62 for discharging fuel in the tank main body 51 is opened in the tank outer surface, characterized in that the flange portion 87 is provided on the fuel pipeline 80 for discharging fuel; the pipeline insertion hole 63 in which one end portion of the fuel pipeline 80 is to be inserted is formed at the outlet of the discharge through-hole 62; the wall portion 64 is provided in such a manner as to extend from the peripheral wall of the opening portion of the pipeline insertion hole 63 while surrounding the pipeline insertion hole 63; and the claws 95 are mounted on, that is, engaged with the wall portion 64; wherein the claws 95 are engaged with the flange portion 87, whereby the fuel pipeline 80 is prevented from being pulled out of the pipeline insertion hole 63.

With this configuration, it is possible to easily, speedily connect the fuel pipeline 80 to the fuel tank 21 by inserting the fuel pipeline 80 in the pipeline insertion hole 63, and engaging the claws 95 with the flange portion 87 of the fuel pipeline 80.

Further, since the wall portion 64 used only for allowing the claws 95 to be mounted thereon or engaged therewith extends from the peripheral wall of the opening portion of the pipeline insertion hole 63, the projecting amount of the wall portion 64 can be made smaller than the projecting amount of the fuel pipeline connecting portion which projects from the tank outer surface to be connected to the fuel pipeline. As a result, it is possible to carry the fuel tank 21 without interference of the wall portion 64 with other members, and hence to improve the handling performance of the fuel tank 21.

The fuel pipeline connecting structure of the present invention is also characterized in that the wall portion 64 is formed into a cylindrical shape, and the claws 95 are provided separately from the wall portion 64, that is, the retainer 96 including the flanges 105 having the claws 95 are provided separately from the wall portion 64, wherein the claws 95 are mounted to the wall portion 64 by fitting the flanges 105 of the retainer 96 in the wall portion 64.

For example, in the case of changing the length or diameter of the fuel pipeline 80 to be inserted in the pipeline insertion hole 63, such a change in length or diameter of the fuel pipeline 80 can be easily realized by changing the dimensions and shapes of the claws 95 and retainer 96 without changing the dimension and shape of the wall portion 64 side of the filler 53.

According to the present invention, there is also provided the fuel pipeline connecting structure for connecting the fuel pipeline 80 to the injector cap 85 including the injection valve holding hole 85a for holding the fuel injection valve and the fuel supplying hole 85b for supplying fuel to the fuel injection valve, characterized in that the flange portion 87 is provided on the fuel pipeline 80 for supplying fuel to the fuel supplying hole 85b of the injector cap 85; the pipeline insertion hole 85c in which one end of the fuel pipeline 80 is to be inserted is provided at the inlet of the fuel supplying hole 85b; the wall portion 85d is provided in such a manner as to extend from the peripheral wall of the opening portion of the pipeline insertion hole 85c while surrounding the opening portion of the pipeline insertion hole 85c, and the claws 95 are mounted to, that is, engaged with the wall portion 85d, wherein the claws 95 are engaged with the flange portion 87, whereby the fuel pipeline 80 is prevented from being pulled out of the pipeline insertion hole 85c.

With this configuration, it is possible to easily, speedily connect the fuel pipeline 80 to injector cap 85 by inserting the fuel pipeline 80 in the pipeline insertion hole 85c, and engaging the claws 95 with the flange portion 87 of the fuel pipeline 80.

Further, since the wall portion 85d used only for allowing the claws 95 to be mounted thereon or engaged therewith extends from the peripheral wall of the opening portion of the pipeline insertion hole 85c, the projecting amount of the wall portion 85d can be made smaller than the projecting amount of the fuel pipeline connecting portion which projects from the injector cap 85 to be connected to the fuel pipeline 80. As a result, it is possible to carry or assembly the injector cap 85 without interference of the wall portion 85d with other members, and hence to improve the handling performance of the injector cap 85.

The above fuel pipeline connecting structure of the present invention is also characterized in that the wall portion 85d is formed into a cylindrical shape, and the claws 95 are provided separately from the wall portion 85d, that is, the retainer 96 including the flanges 105 (see FIG. 6) having the claws 95 are provided separately from the wall portion 85d, wherein the claws 95 are mounted to the wall portion 85d by fitting the flanges 105 of the retainer 96 in the wall portion 85d.

For example, in the case of changing the length or diameter of the fuel pipeline 80 to be inserted in the pipeline insertion hole 85c, such a change in length or diameter of the fuel pipeline 80 can be easily realized by changing the dimensions and shapes of the claws 95 and retainer 96 without changing the dimension and shape of the wall portion 85d side of the injector cap 85.

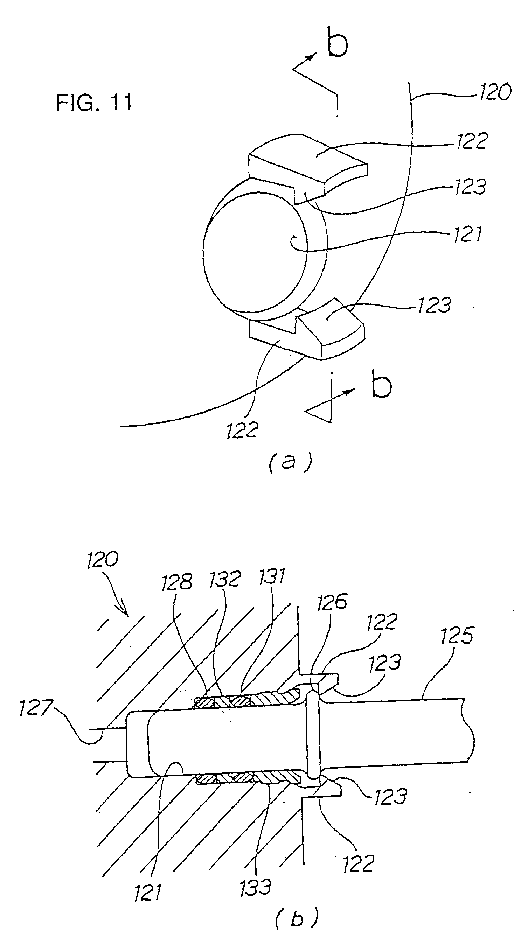

FIGS. 11(a) and 11(b) are views illustrating another embodiment of the fuel pipeline connecting structure of the present invention, wherein FIG. 11(a) is a perspective view and FIG. 11(b) is a sectional view taken on line b-b of FIG. 11(a).

As shown in Fig. 11(a), a filler 120 of a fuel tank has a pipeline insertion hole 121 communicated to a discharge through-hole for discharging fuel (which will be described later). Two elastic tongue pieces 122 are integrally formed on the filler 120 in such a manner as to extend from portions near an opening portion of the pipeline insertion hole 121. Two claws 123 are integrally formed on the tongue pieces 122.

As shown in FIG. 11(b), a fuel pipeline 125 is inserted in the pipeline insertion hole 121, and the claws 123 are engaged with a flange portion 126 provided on the fuel pipeline 125, whereby the fuel pipeline 125 is prevented from being pulled out of the pipeline insertion hole 121. In the figure, reference numeral 127 designates a discharge through-hole; 128 and 131 are O-rings; 132 is a spacer; and 133 is a bush.

In this embodiment, the O-rings 128 and 131 are radially fastened between the pipeline insertion hole 121 and the fuel pipeline 125, to thereby exhibit their sealing functions.

As described above with reference to FIGS. 11(a) and 11(b), according to the present invention, there is provided the fuel pipeline connecting structure for connecting the fuel pipeline 125, which is adapted to discharge fuel, to the fuel tank including the filler 120 having a discharge through-hole 127 for discharging fuel in the fuel tank, characterized in that the flange portion 126 is provided on the fuel pipeline 125; the pipeline insertion hole 121, in which one end portion of the fuel pipeline 125 is to be inserted, is provided at the outlet of the discharge through-hole 127; the tongue pieces 122 are provided in such a manner as to extend from the filler 120 while surrounding the pipeline insertion hole 121; and the claws 123 are provided on the tongue pieces 122; wherein the claws 123 are engaged with the flange portion 126, whereby the fuel pipeline 125 is prevented from being pulled out of the pipeline insertion hole 121.

With this configuration, it is possible to easily, speedily connect the fuel pipeline 125 to the fuel tank by inserting the fuel pipeline 125 in the pipeline insertion hole 121 and engaging the claws 123 with the flange portion 126 of the fuel pipeline 125.

In this embodiment, since the tongue pieces 122 as a wall portion used only for allowing the claws 123 to be mounted thereon or engaged therewith extend from the filler 120, the projecting amount of the tongue pieces 122 can be made smaller than the projecting amount of the fuel pipeline connecting portion which projects from the filler to be connected to the fuel pipeline. As a result, it is possible to carry or assembly the filler 120 without interference of the tongue pieces 122 with other members, and hence to improve the handling performance of the filler 120.

The above fuel pipeline connecting structure of the present invention is also characterized in that a pair of the tongue pieces 122 extending from the filler 120 are provided as the wall portion, and the claws 123 are integrally formed on the tongue pieces 122.

Since the claws 123 are integrally formed on the tongue pieces 122, it is possible to reduce the number of parts required for connecting the fuel pipeline 125 to the fuel tank, and hence to lower the production cost of the fuel supply line.

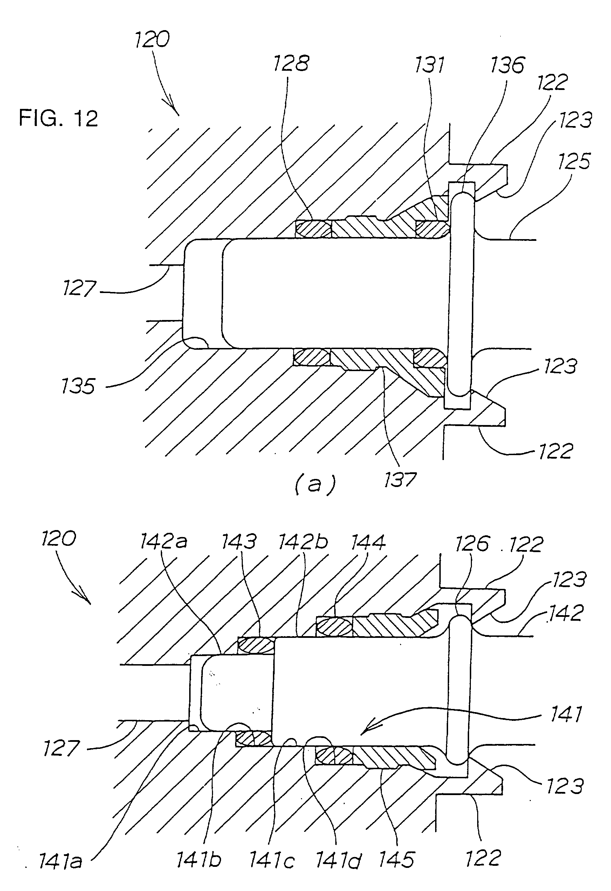

FIGS. 12(a) and 12(b) are views illustrating first and second modifications of the fuel pipeline connecting structure of the present invention, respectively, in which the seal configuration and the pipeline supporting configuration of the fuel pipeline connecting structure shown in FIG. 11(b) are modified. In addition, parts corresponding to those in the embodiment shown in FIG. 11(b) are designated by the same reference numerals, and the overlapped description thereof is omitted.

In the first modification shown in FIG. 12(a), a fuel pipeline 125 is inserted in a pipeline insertion hole 135, and claws 123 are engaged with a flange portion 136 provided on the fuel pipeline 125, whereby the fuel pipeline 125 is prevented from being pulled out of the pipeline insertion hole 135. In the figure, reference numeral 137 designates a bush.

According to the first modification, the spacer 132 in the embodiment shown in FIG. 11(b) is omitted, to thereby lower the production cost, and the O-rings 128 and 131 are radially fastened between the pipeline insertion hole 135 and the fuel pipeline 125, to thereby exhibit their sealing functions.

In the second modification shown in FIG. 12(b), a fuel pipeline 142 is inserted in a pipeline insertion hole 141, and claws 123 are engaged with a flange portion 126 provided on the fuel pipeline 142, whereby the fuel pipeline 142 is prevented from being pulled out of the pipeline insertion hole 141.

The pipeline insertion hole 141 includes a small-diameter hole 141a, an intermediate small-diameter hole 141b, an intermediate large-diameter hole 141c, and a large-diameter hole 141d. An O-ring 143 is inserted in the depth of the intermediate small-diameter hole 141b, and an O-ring 144 is inserted in the depth of the large-diameter hole 141d and subsequently a bush 145 is fitted in the large-diameter hole 141d.

The fuel pipeline 142 includes, at its leading end, a small-diameter portion 142a and a large-diameter portion 142b continuous to the small-diameter portion 142a. The small-diameter portion 142a is inserted in the small-diameter hole 141a of the pipeline insertion hole 141, and the large-diameter portion 142b is inserted in the intermediate large-diameter hole 141c of the pipeline insertion hole 141.

According to the second modification, the spacer 132 in the embodiment shown in FIG. 11(b) is omitted, to thereby lower the production cost; and the O-ring 143 is radially fastened between the intermediate small-diameter hole 141b of the pipeline insertion hole 141 and the small-diameter portion 142a of the fuel pipeline 142, to thereby exhibit its sealing function, and the O-ring 144 is radially fastened between the large-diameter portion 141d of the pipeline insertion hole 141 and the large-diameter portion 142b of the fuel pipeline 142, to thereby exhibit its sealing function.

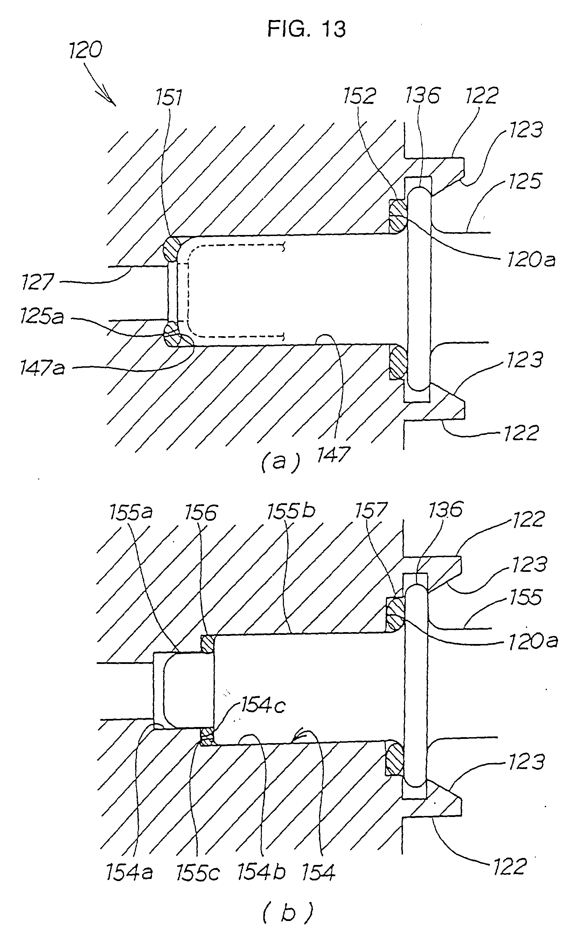

FIGS. 13(a) and 13(b) are views illustrating third and fourth modifications of the fuel pipeline connecting structure of the present invention, respectively, in which the seal configuration and the pipeline supporting configuration of the fuel pipeline connecting structure shown in FIG. 11(b). In addition, parts corresponding to those in the embodiment shown in FIG. 11(b) and in the first and second modifications shown in FIGS. 12(a) and 12(b) are designated by the same reference numerals, and the overlapped description thereof is omitted.

In the third modification shown in FIG. 13(a), a fuel pipeline 125 is inserted in a pipeline insertion hole 147, and claws 123 are engaged with a flange portion 136 provided on the fuel pipeline 125, whereby the fuel pipeline 125 is prevented from being pulled out of the pipeline insertion hole 147. In the figure, reference numerals 151 and 152 designate O-rings.

According to the third modification, the spacer 132 and the bush 133 in the embodiment shown in FIG. 11(b) are omitted, to thereby lower the production cost; and the O-ring 151 is fastened along the axial direction of the fuel pipeline 125 between a bottom portion 147a of the pipeline insertion hole 147 and a leading end 125a of the fuel pipeline 125, to thereby exhibit its sealing function, and the O-ring 152 is fastened along the axial direction of the fuel pipeline 125 between a groove 120a provided in the vicinity of an opening portion of the pipeline insertion hole 147 and the flange portion 136 of the fuel pipeline 125, to thereby exhibit its sealing function.

In the fourth modification shown in FIG. 13(b), a fuel pipeline 155 is inserted in a pipeline insertion hole 154, and claws 123 are engaged with a flange portion 136 provided on the fuel pipeline 155, whereby the. fuel pipeline 155 is prevented from being pulled out of the pipeline insertion hole 154.

The pipeline insertion hole 154 includes a small-diameter hole 154a and a large-diameter hole 154b, and an O-ring 156 is inserted in the depth of the small-diameter hole 154a and an O-ring 157 is disposed in the vicinity of an opening portion of the large-diameter hole 154b.

The fuel pipeline 155 includes, at its leading end, a small-diameter portion 155a and a large-diameter portion 155b continuous to the small-diameter portion 155a. The small-diameter portion 155a is inserted in the small-diameter hole 154a of the pipeline insertion hole 154 and the large-diameter portion 155b is inserted in the large-diameter hole 154b of the pipeline insertion hole 154.

According to the fourth modification, the spacer 132 and the bush 133 in the embodiment shown in FIG. 11(b) are omitted, to thereby lower the production cost; and the O-ring 156 is fastened in the axial direction of the fuel pipeline 155 between a bottom portion 154c of the pipeline insertion hole 154 and a stepped portion 155c of the fuel pipeline 155, to thereby exhibit its sealing function, and the O-ring 157 is fastened in the axial direction of the fuel pipeline 155 between a groove 120a provided in the vicinity of an opening portion of the pipeline insertion hole 154 and the flange portion 136 of the fuel pipeline 155, to thereby exhibit its sealing function.

In addition, the wall portion of the present invention may be configured such that a member prepared separately from the filler is mounted to the filler by means of a fastening member or joined to the filler by means of adhesive bonding or welding.

The member, provided with the flange portion, at the end portion of the fuel pipeline may be made from not only a metal material but also a resin material.

The wall portion of the injector cap may be configured as a pair of tongue pieces provided on the injector cap in such a manner as to extend from a peripheral wall of the pipeline insertion hole, and claws be integrally formed on the tongue pieces. With this configuration, it is possible to reduce the number of parts required for connecting the fuel pipeline to the injector cap, and hence to lower the production cost of the fuel supply line.

Although the present invention is applied to the fuel pipeline connecting structures for a fuel tank and an injector cap in the above-described embodiments, the present invention is not limited thereto but may be applied to connecting structures for other engine parts such as a cooling water pipeline, an air pipeline, and an oil pipeline.

The present invention having the above-described configuration exhibits the following effects:

According to the first aspect of the invention, the flange is provided on the fuel pipeline for discharging fuel from the fuel tank; the pipeline insertion hole in which one end portion of the fuel pipeline is to be inserted is provided at the outlet of the discharge through-hole; the wall portion extends from the filler in such a manner as to surround the pipeline insertion hole; and the claws are provided or mounted on the wall portion; wherein the fuel pipeline is inserted in the pipeline insertion hole and the claws are engaged with the flange of the fuel pipeline. As a result, the fuel pipeline can be easily, speedily connected to the fuel tank.

Further, since the wall portion used only for allowing the claws to be provided or mounted thereon extends from the tank outer surface, the projecting amount of the wall portion can be made smaller than the projecting amount of the conventional fuel pipeline connecting portion which projects from the tank outer surface to be connected to the fuel pipeline. As a result, it is possible to assembly or carry the fuel tank without interference of the wall portion with other members, and hence to improve the handling performance of the fuel tank.

Furthermore, since the wall portion is configured as a pair of tongue pieces extending from a filler portion through which fuel is to be injected in the fuel tank and the claws are integrally formed on the tongue pieces, it is possible to reduce the number of parts required for connecting the fuel pipeline to the fuel tank and hence to lower the production cost of the fuel supply line.

Furthermore, since the wall portion is formed into a cylindrical shape and a flange having the claws, prepared separately from the wall portion, is fitted into the cylindrical wall portion, for example, in the case of changing the length or diameter of the fuel pipeline to be inserted in the pipeline insertion hole, such a change in length or diameter of the fuel pipeline can be easily realized by changing the dimensions and shapes of the claws without changing the dimension and shape of the wall portion side.

According to the further aspect of the invention, a flange is provided on the fuel pipeline for discharging fuel to the fuel supplying hole of the injector cap; a pipeline insertion hole in which one end of the fuel pipeline is to be inserted is provided at the inlet of the fuel supplying hole; a wall portion extends from a peripheral wall of an opening portion of the pipeline insertion hole in such a manner as to surround the pipeline insertion hole; and claws are provided or mounted on the wall portion; wherein the fuel pipeline is inserted in the pipeline insertion hole and the claws are engaged with the flange of the fuel pipeline. As a result, the fuel pipeline can be easily, speedily connected to the injector cap.

Further, since the wall portion used only for allowing the claws to be provided or mounted thereon extends from the peripheral wall of the opening portion of the pipeline insertion hole, the projecting amount of the wall portion can be made smaller than the projecting amount of the conventional fuel pipeline connecting portion which projects from the injector cap to be connected to the fuel pipeline. As a result, it is possible to assembly or carry the injector cap without interference of the wall portion with other members, and hence to improve the handling performance of the injector cap.

Furthermore, since the wall portion is configured as a pair of tongue pieces and the claws are integrally formed on the tongue pieces, it is possible to reduce the number of parts required for connecting the fuel pipeline to the injector cap and hence to lower the production cost of the fuel supply line.

Furthermore, since the wall portion is formed into a cylindrical shape and a flange having the claws, prepared separately from the wall portion, is fitted into the cylindrical wall portion, for example, in the case of changing the length or diameter of the fuel pipeline to be inserted in the pipeline insertion hole, such a change in length or diameter of the fuel pipeline can be easily realized by changing the dimensions and shapes of the claws without changing the dimension and shape of the wall portion side.

Furthermore, since the flange is provided on each of both end portions of the fuel pipeline and the shapes of both the end portions, provided with flanges, of the fuel pipeline may be configured to be identical to each other, both the end portions of the fuel pipeline can be reversibly connected to parts of the fuel supply line, to thereby improve the assembling performance of the fuel pipeline.

A flange portion 87 is provided on a fuel pipeline 80 for discharging fuel. A pipeline insertion hole 63 in which one end portion of the fuel pipeline 80 is to be inserted is formed at the outlet of a discharge through-hole 62. A wall portion 64 extends from the outer surface of a fuel tank 21 in such a manner as to surround the pipeline insertion hole 63. Claws 95 are mounted on the wall portion 64, and then the claws 95 are engaged with the flange portion 87 of the fuel pipeline 80. With this configuration, the fuel pipeline 80 is prevented from being pulled out of the pipeline insertion hole 63.

The fuel pipeline can be easily, speedily connected to a fuel tank by inserting the fuel pipeline in the pipeline insertion hole, and engaging the claws with the flange portion of the fuel pipeline. Further, the projecting amount of the wall portion can be made smaller than the projecting amount of a conventional fuel pipeline connecting portion which projects from the tank outer surface to be connected to the fuel pipeline. As a result, it is possible to carry the fuel tank without interference of the wall portion with other members, and hence to improve the handling performance of the fuel tank.

## Claims

1. A fuel pipeline connecting structure for connecting a fuel pipeline (80; 125; 142; 155) to a fuel tank (21) having a discharge through-hole (62; 127) opened in its outer surface for discharging fuel from said fuel tank (21), **characterized in that**
a flange (87; 126; 136) is provided on said fuel pipeline (80; 125; 142; 155) for discharging fuel from said fuel tank (21);
a pipeline insertion hole (63; 121; 135; 141; 147; 154) in which one end portion of said fuel pipeline (80; 125; 142; 155) is to be inserted is provided at the outlet of said discharge through-hole (62; 127);
a wall portion (64; 122) extends from the outer surface of said fuel tank (21) in such a manner as to surround said pipeline insertion hole (63; 121; 135; 141; 147; 154); and
claws (95; 123) are provided or mounted on said wall portion (64; 122);
wherein said fuel pipeline (80; 125; 142; 155) is inserted in said pipeline insertion hole (63; 121; 135; 141; 147; 154) and said claws (95; 123) are engaged with said flange (87; 126; 136) of said fuel pipeline (80; 125; 142; 155), whereby said fuel pipeline (80; 125; 142; 155) is prevented from being pulled out of said pipeline insertion hole (63; 121; 135; 141; 147; 154).

2. A fuel pipeline connecting structure according to claim 1, wherein said wall portion (122) is configured as a pair of tongue pieces (122) extending from a filler portion (120) through which fuel is to be injected in said fuel tank (21), and said claws (123) are integrally formed on said tongue pieces (122).

3. A fuel pipeline connecting structure according to claim 1, wherein said wall portion (64) is formed into a cylindrical shape, and a flange (105) having said claws (95), prepared separately from said wall portion (64), is fitted into said cylindrical wall portion (64).

4. A fuel pipeline connecting structure for connecting a fuel pipeline (80;125;142;155) to an injector cap (85) including an injection valve holding hole (85a) for holding a fuel injection valve and a fuel supplying hole (85b) for supplying fuel to said fuel injection valve, **characterized in that**
a flange (87) is provided on said fuel pipeline (80) for discharging fuel to said fuel supplying hole (85b) of said injector cap (85);
a pipeline insertion hole (85c) in which one end of said fuel pipeline (80) is to be inserted is provided at the inlet of said fuel supplying hole (85b);
a wall portion (85d) extends from a peripheral wall of an opening portion of said pipeline insertion hole (85c) in such a manner as to surround said pipeline insertion hole (85c); and
claws (95) are provided or mounted on said wall portion (85d);
wherein said fuel pipeline (80) is inserted in said pipeline insertion hole (85c) and said claws (95) are engaged with said flange (87) of said fuel pipeline (80), whereby said fuel pipeline (80) is prevented from being pulled out of said pipeline insertion hole (85c).

5. A fuel pipeline connecting structure according to claim 4, wherein said wall portion is configured as a pair of tongue pieces, and said claws are integrally formed on said tongue pieces.

6. A fuel pipeline connecting structure according to claim 4, wherein said wall portion (85d) is formed into a cylindrical shape, and a flange (105) having said claws (95), prepared separately from said wall portion (85d), is fitted into said cylindrical wall portion (85d).

7. A fuel pipeline connecting structure according to any one of claims 1 to 6, wherein said flange (87; 126; 136) is provided on each of both end portions of said fuel pipeline (80; 125; 142; 155).
